# EUROPÄISCHE PATENTSCHRIFT

(11) **EP 3 698 077 B1**
(45) Veröffentlichungstag und Bekanntmachung des Hinweises auf die Patenterteilung: **22.02.2023**
(21) Anmeldenummer: 18788703.9
(22) Anmeldetag: 10.10.2018
(51) Int. Cl.: F16L 55/054, B67C 3/00, B67C 3/28, B67C 7/00, F16L 55/055, B67C 3/22

(54) **VORRICHTUNG UND VERFAHREN ZUR ASEPTISCHEN DRUCKENTLASTUNG IN EINER BEHÄLTERBEHANDLUNGSMASCHINE**
DEVICE AND METHOD FOR ASEPTIC PRESSURE RELIEF IN A MACHINE FOR HANDLING CONTAINERS
DISPOSITIF ET PROCÉDÉ DE DÉCOMPRESSION ASEPTIQUE D'UNE MACHINE METTANT EN OEUVRE DES RÉCIPIENTS

(30) Priorität: 19.10.2017 DE 102017124397
(43) Veröffentlichungstag der Anmeldung: 26.08.2020
(73) Patentinhaber: KHS GmbH, 44143 Dortmund (DE)
(72) Erfinder: FICKERT, Hilmar, 65830 Kriftel (DE)
(86) Internationale Anmeldenummer: PCT/EP2018/077614
(87) Internationale Veröffentlichungsnummer: WO 2019/076700

(56) Entgegenhaltungen:
- EP-A1- 3 020 679
- DE-A1- 19 723 802
- US-A- 3 103 234

## Beschreibung

Die Erfindung bezieht sich auf eine Behälterbehandlungsmaschine oder -anlage mit einer Medienleitung und einer Druckentlastungsvorrichtung zur aseptischen Druckentlastung in der Medienleitung und auf ein Verfahren zur aseptischen Druckentlastung in einer Medienleitung einer Behälterbehandlungsmaschine oder - anlage.

Bei Behälterbehandlungsmaschinen oder -anlagen, wie beispielsweise auch bei Füllsystemen oder Füllanlagen in der Getränkeindustrie werden fluide Betriebs- oder Reinigungsmedien sowie insbesondere auch das Füllgut in Medienleitungen geführt bzw. transportiert, wobei die Medienleitungen in der Regel unter Druck stehen.

Als ein Beispiel für eine besonders lange und ein großes Innenvolumen aufweisende Medienleitung kann insbesondere die aus dem Getränkekeller bis zum Füller führende Produktleitung genannt werden.

Zum Füllen von Behältern sind dabei Füllverfahren, insbesondere ein Freistrahlfüllen sowie ein Druckfüllen in unterschiedlichen Ausführungen bekannt. Unter "Freistrahlfüllen" oder "Freistrahlbefüllung" wird im Rahmen der vorliegenden Erfindung ein Füllverfahren verstanden, bei dem das flüssige Füllgut dem zu befüllenden Behälter ab dem Flüssigkeitsventil in einem freien Füllstrahl oder Füllgutstrahl zuströmt, wobei die Strömung des Füllgutes nicht durch Leitelemente wie z.B. Ableitschirme, Drallkörper, kurze oder lange Füllrohre beeinflusst oder verändert wird. Freistrahlfüllen kann sowohl drucklos, als auch unter Druck erfolgen. Bei der drucklosen Freistrahlfüllung weist der Behälter Umgebungsdruck auf, wobei der Behälter in der Regel mit seiner Behältermündung oder -öffnung nicht am Füllelement anliegt, sondern von dem Füllelement bzw. von einer vorgesehenen Abgabeöffnung beabstandet ist. Liegt der Behälter bei der drucklosen Freistrahlfüllung doch mit seiner Behältermündung am Füllelement an, so stellt ein Gasweg eine Verbindung zwischen dem Innenraum des Behälters und der Umgebung her, wodurch eine drucklose Füllung ermöglicht wird. Bevorzugt entweicht über diesen Gasweg auch das im Behälter enthaltene und durch das in den Behälter einströmende Getränk verdrängte Gas in die Umgebung.

Erfolgt die Freistrahlfüllung unter einem vom Umgebungsdruck abweichenden Druck, so wird der Behälter mit seiner Mündung gegen das Füllelement angepresst und abgedichtet, der Druck im Innenraum des Behälters wird durch Beaufschlagung mit einem Spanngas oder durch Beaufschlagung mit einem Unterdruck auf diesen, vom Umgebungsdruck abweichenden Druck eingestellt, welcher sowohl über, als auch unter dem Umgebungsdruck liegen kann.

Unabhängig von der Art der Behälterbehandlung, insbesondere des Füllverfahrens und unabhängig von der Ausbildung der jeweiligen Behälterbehandlungsanlage, insbesondere des jeweiligen Füllelementes bzw. der Füllanlage, kann es unter bestimmten Bedingungen, beispielsweise bei Betriebsstörungen dazu kommen, dass zumindest einzelne Maschinen oder aber die gesamte Anlage angehalten werden muss. Ein solches Anhalten der gesamten Anlage wird vorliegend auch als Nothalt bezeichnet.

Durch einen solchen Nothalt ist zumindest die unmittelbare Verletzungsgefahr durch sich bewegende Maschinen- oder Anlagenteile gebannt, so dass sich das Bedienungs- oder Reparaturpersonal direkt an die Maschinen begeben kann, um die dort aufgetretenen Defekte und/oder Störungen zu beheben.

Problematisch ist dabei allerdings, dass die in den Maschinen und Anlagen, insbesondere in den Medienleitungen vorhandenen Medien weiterhin unter Druck stehen, so dass es in ungünstigen Fällen durch die sich plötzlich entspannenden und damit auch expandierenden Medien zu gefährlichen Situationen oder gar Verletzungen kommen kann. Durch den Restdruck der Medien kann im Fall einer Wartung an der Maschine, beispielsweise bei einer Demontage eines Ventils, das Bedienpersonal verletzt werden.

Zur Lösung dieses Problems ist es bekannt, entweder eine Druckentlastungsöffnung in die freie Umgebung zu öffnen oder eine Druckentlastung in ein freies Volumen vorzunehmen, wobei eine Reduzierung des Mediendruckes auf einen Minderdruck erzielt wird.

Nachteilig hierbei ist es jedoch, dass ein Öffnen einer Medienleitung bzw. einer Ventilverbindung in die Umgebung immer das Risiko birgt, dass Verschmutzungen, insbesondere Keime aus der Umgebung durch die Öffnungen in die Medienleitungen und damit in die Anlage eindringen können. Besondere Nachteile ergeben sich dabei durch die Gefahr einer unerwünschten Verkeimung der Anlage und/oder einer Kontamination des Füllgutes.

Hierzu ist aus der EP 3 020 679 A1 eine Rundläufer-Füllmaschine mit einer Vielzahl von Füllorganen zum Befüllen jeweils eines zu befüllenden Behälters mit einem Füllprodukt bekannt, aufweisend einen Produkttank, welcher über einen Produktzulauf mit dem abzufüllenden Füllprodukt versorgt wird und welchem über eine Spanngasleitung ein Spanngas, wie z.B. Kohlendioxid, zugeführt wird, wobei der Produkttank durch das eingeleitete Spanngas mit einem Überdruck beaufschlagt ist. Der Produkttank sowie auch die Spanngasleitung sind wiederum mit einem Füllventil verbunden, durch welche ein zu befüllender Behälter mittels dem allgemein bekannten Vorgang des "Gegendruckfüllens" befüllt wird. Die Rundläufer-Füllmaschine weist weiter einen Isolator, in dessen inneren ein im Wesentlichen steriler Bereich bereitgestellt ist, und eine Entlastungsanordnung auf, welche mit dem Füllventil verbunden ist und eine Entlastungsleitung aufweist, deren Auslassöffnung durch das Isolatorgehäuse/-decke in den sterilen Bereich mündet. Somit wird verhindert, dass es beim Entlasten des befüllten Behälters zu einer Kontamination des Füllprodukts kommt, da die Auslassöffnung der Entlastungsanordnung nicht mit der unsterilen Atmosphäre in Verbindung kommt und somit keine Keime in die Entlastungsandordnung gelangen. Bei der füllgutführenden Leitung der Rundläufer-Füllmaschine ist jedoch keine Entlastungsanordnung vorgesehen.

Weiterhin ist aus der US 3,103,234 A ein Dämpfungssystem für eine flüssigkeitsführende Rohrleitung einer Papierherstellungsanlage offenbart, welche dazu ausgebildet ist, plötzlich auftretende Druckstöße in einer flüssigkeitsführenden Rohrleitung zu dämpfen bzw. zu minimieren. Das Dämpfungssystem besteht dabei aus einem zylinderförmigen Gehäuse, an dessen Ende jeweils ein Flansch angeordnet ist, um das Gehäuse in die Rohrleitung einbauen zu können. Weiterhin ist im Gehäuse eine innere, zylinderförmig ausgebildete Hülse aus elastischem Kunststoff, wie z.B. Gummi oder synthetischen Kunststoff, vorgesehen, welche an beiden Enden druckdicht an die Rohrleitung anschließt, sodass das Fluid hindurch strömen kann. Im Gehäuse ist ferner eine zweite Hülse aus elastischem Kunststoff aufgenommen, wobei diese konzentrisch zu ersten Hülse angeordnet ist und druckdicht mit den Endseiten des Gehäuses verbunden ist. Zwischen der ersten und zweiten Hülse ist ein erster Dämpfungsraum ausgebildet, in welchem ein Dorn mit einer Vielzahl von Durchtrittsöffnungen angeordnet ist und welcher mit einem Dämpfungsmedium gefüllt ist. Bei dem Dämpfungsmedium handelt es sich um unter druckstehendes Gas, vorzugsweise jedoch um eine Flüssigkeit mit definierter Viskosität. Zudem wird zwischen der Gehäusewandung und der zweiten Hülse wird ein zweiter Dämpfungsraum ausgebildet, wobei dieser eine Einlassöffnung aufweist, über die der Dämpfungsraum mit einem Dämpfungsmedium, wie z.B. unter Druck stehendes Gas oder einer Flüssigkeit, wie z.B. Wasser, befüllt werden kann. Im Falle eines Druckstoßes in der Rohrleitung wird dieser nun größtenteils durch die in den Dämpfungsräumen befindlichen Dämpfungsmedien sowie den dem speziell ausgebildeten Dorn absorbiert. Nachteilig ist, dass einerseits der Aufbau des Dämpfungssystems relativ komplex ist, andererseits der Aufbau verhindert, dass das Expansionsvolumen, welches die erste Hülse einnehmen kann, äußerst gering ist.

Die DE 197 23 802 A1 betrifft eine Vorrichtung zum Auftragen eines fluiden Behandlungsmedium auf eine Bahn, insbesondere textile Bahn, mit einem Rohrelement zum Einsetzen in eine flüssigkeitsführende Rohleitung. Das Rohrelement umfassend dabei ein zylinderförmiges Gehäuse, welches mittels zweier endseitiger Flansche in die flüssigkeitsführende Rohrleitung eingebaut ist und im Inneren eine Ringkammer ausbildet. Im Gehäuse ist ferner ein das Fluid durch das Gehäuse führender Schlauchabschnitt eingespannt, welcher aus einem elastisch nachgiebigen Material, wie z.B. einem elastomeren Kunststoff oder Gummi, besteht. Die Ringkammer ist über eine Einlassöffnung mit einem Umschaltventil verbunden, wodurch die Ringkammer wahlweise mit einem geregelten Druck beaufschlagt werden kann, welcher dem Druck der Rohrleitung entspricht, oder mit einem Unterdruckraum, welcher ständig von einer Vakuumpumpe evakuiert wird, verbunden werden kann. Im Fall, dass in der Ringkammer im Wesentlichen der gleiche Druck aufrechterhalten wird wie in der Rohrleitung, verbleibt der Schlauchabschnitt im einem nahezu zylindrischen Zustand und dient als Dämpfungsglied für in die Rohrleitung auftretende Druckstöße. Wird die Ringkammer dagegen mit dem Unterdruck beaufschlagt, bläht sich der Schlauchabschnitt in die Ringkammer hinein auf, wodurch innerhalb des Schlauchabschnitts ein vergrößertes Volumen entsteht, in welches Flüssigkeit aus der Rohrleitung eingesaugt wird. Dabei wird die Flüssigkeit von der Austrittsstelle zurückgesaugt, sodass das Austreten des Fluids aus der Auftragsöffnung der Vorrichtung bei einem Farbwechsel wirksam verhindert wird. Nachteilig ist, dass bei der derartigen Vorrichtung keine Drucksteuerungseinheit vorgesehen ist, mittels derer der Druck, insbesondere der Unterdruck beim Farbwechsel, in der Ringkammer einstellbar ist. Folglich ist das Volumen, welches der Schlauchabschnitt bei Unterdruck in der Ringkammer einnimmt, immer konstant.

Ausgehend hiervon liegt der vorliegenden Erfindung die Aufgabe zu Grunde, eine Behälterbehandlungsmaschine oder -anlage mit einer Druckentlastungsvorrichtung für Medienleitungen bereitzustellen, die die vorgenannten Nachteile vermeidet, die zudem einfach aufgebaut ist, individuell einstellbar und auf einfache und zuverlässige Weise eine aseptische Druckentlastung ermöglicht. Diese Aufgabe wird mit den Merkmalen des Patentanspruches 1 gelöst. Die Unteransprüche betreffen dabei besonders bevorzugte Ausführungsvarianten der Erfindung.

Mit der vorliegenden Erfindung wird eine Behälterbehandlungsmaschine oder -anlage in der Form einer Füllmaschine oder Füllanlage oder Behälterabfüllanlage mit einer Medienleitung in der Form einer Getränke-, Füllgut- oder Produktleitung und einer Druckentlastungsvorrichtung zur aseptischen Druckentlastung in der Medienleitung bereitgestellt. Die Druckentlastungsvorrichtung umfasst wenigstens ein Gehäuse mit einer Gehäusewandung, eine mit der Medienleitung verbindbare, eine Durchgangswandung aufweisende Durchgangsleitung für ein Medium, und zumindest einen Zuleitungsanschluss und einen Ableitungsanschluss zum jeweiligen Anschluss an die Medienleitung. Im Inneren des Gehäuses ist dabei ein durch die Gehäusewandung definierter Druckraum ausgebildet und die Durchgangsleitung erstreckt sich wenigstens abschnittsweise durch den Druckraum im Inneren des Gehäuses. Ein wesentliche Aspekt gemäß der Erfindung besteht darin, dass die Durchgangswandung der Durchgangsleitung wenigstens in einem sich durch den Druckraum erstreckenden Abschnitt zumindest teilweise aus einem elastisch verformbaren Material gebildet ist und dass die Druckentlastungsvorrichtung derart ausgebildet ist, dass in dem Druckraum zumindest ein vorgegebener Druckraum innendruck einstellbar ist.

Die erfindungsgemäße Druckentlastungsvorrichtung ist gemäß dem vorliegenden Verständnis als aseptische Druckentlastungsvorrichtung zu verstehen. Im Einbau- bzw. Verwendungszustand ist die erfindungsgemäße Druckentlastungsvorrichtung in eine Medienleitung, vorzugsweise in eine Getränke-, Füllgut- oder Produktleitung integriert bzw. zwischen zwei Anschlussstellen in dieser Medienleitung eingebaut oder zwischengeschaltet. Das Medium, vorzugsweise ein Getränk oder anderes Füllgut bzw. Produkt durchströmt die Durchgangsleitung, welche vorliegend auch als Strömungsweg verstanden wird, und zwar in einer vom Zuleitungsanschluss in Richtung des Ableitungsanschlusses orientierten Strömungsrichtung. Die Medienleitung ist quasi um die Länge der Durchgangsleitung bzw. um den Strömungsweg verlängert, das heißt im Einbauzustand stellt die Durchgangsleitung einen gleichzeitig mit der Medienleitung in Benutzung bzw. in Betrieb befindlichen Teil der Medienleitung dar. Die Durchgangsleitung wird vorzugsweise vollständig in der Art und Weise vom Medium durchströmt, dass sich keine Toträume oder ähnliches ausbilden, wodurch eine effektive, sichere und vollständige Reinigung der Durchgangsleitung bzw. des Strömungsweges gewährleistet ist.

Aufgrund der integrierten Anordnung der Druckentlastungsvorrichtung in der Medienleitung besteht in einem Normalbetriebszustand kein Druckunterschied zwischen der Medienleitung und der Durchgangsleitung. Ein in der Medienleitung herrschender Mediendruck oder Leitungsdruck entspricht daher dem in der Durchgangsleitung herrschenden Mediendruck. Dieser Mediendruck wird vorliegend auch als Betriebsdruck verstanden.

Erfindungsgemäß erstreckt sich die Durchgangsleitung durch den Druckraum, dessen Druckrauminnendruck einstellbar ist. Zudem ist die Durchgangswandung der Durchgangsleitung zumindest teilweise aus einem elastisch verformbaren Material gebildet, wobei das elastisch verformbare Material vorliegend auch als flexible Membran verstanden werden kann. Wird nun der Druckrauminnendruck verringert und sinkt daher unter den in der Medienleitung bzw. in der Durchgangsleitung herrschenden Mediendruck, so dehnt sich das elastisch verformbare Material der Durchgangswandung und das Volumen der Durchgangsleitung vergrößert sich. Dadurch kommt es zu einer Druckentlastung in der Medienleitung. Abhängig vom Druckrauminnendruck bzw. in Abhängigkeit eines Druckverhältnisses aus Mediendruck und Druckrauminnendruck kann das Volumen der Durchgangsleitung variieren, insbesondere kann sich der Raum der Durchgangsleitung ausdehnen. Die Druckentlastungsvorrichtung schafft somit in der Medienleitung einen zusätzlichen Raum, insbesondere einen Ausgleichs- oder Ausdehnungsraum bzw. einen Expansionsraum.

Unterschiedlich zum bekannten Stand der Technik sieht die erfindungsgemäße Druckentlastungsvorrichtung nicht vor, die Medienleitungen zur Druckentlastung nach außen hin zu öffnen. Das Problem wird vielmehr dadurch gelöst, ein nicht mit dem Außenraum in Verbindung stehendes Volumen, insbesondere Ausgleichs- oder Ausdehnungsvolumen bzw. Expansionsvolumen bereitzustellen, um eine Druckentlastung in den Medienleitungen herbeizuführen. Das Expansionsvolumen wird daher vorliegend auch als "aseptisches Expansionsvolumen" verstanden. Dieses aseptische Expansionsvolumen entlastet bei einem Nothalt bzw. bei Wartung den in der Medienleitung vorherrschenden Mediendruck bzw. Leitungsdruck von einem Betriebs- oder Produktionsdruck auf einen Entlastungsdruck, bei dem die Gefahr von Personenschäden sicher vermieden ist.

Besonders vorteilhaft erfolgt mit der vorliegenden Erfindung die Erweiterung des zur Verfügung stehenden Volumens, ohne eine Verbindung zur gegebenenfalls schmutz- und/oder keimbelasteten Umgebung herzustellen und ohne weitere, zuvor unbenutzte Leitungen oder Volumina, nämlich Totvolumina hinzuzuschalten. Besondere Vorteile ergeben sich somit dadurch, dass zusätzliches "Entlastungsvolumen" genutzt werden kann, ohne den Hygienezustand einer Behälterbehandlungsanlage, insbesondere einer Getränkeabfüllanlage zu verschlechtern.

Gemäß einer vorteilhaften Ausführungsvariante ist vorgesehen, dass eine mit dem Druckraum in wirksamer Verbindung stehende Drucksteuerung vorgesehen ist, wobei die Drucksteuerung zur Einstellung des zumindest einen vorgegebenen Druckrauminnendruckes im Druckraum eingerichtet ist. Besonders bevorzugt ist in dem Druckraum zumindest ein erster Druckrauminnendruck und alternativ zumindest ein zweiter Druckrauminnendruck einstellbar, wobei der erste Druckrauminnendruck im Wesentlichen einem in der Medienleitung herrschenden Betriebsdruck entspricht und wobei der zweite Druckrauminnendruck einem im Vergleich zum Betriebsdruck geringeren Entlastungsdruck entspricht.

Gemäß einer weiteren vorteilhaften Ausführungsvariante ist vorgesehen, dass die Durchgangswandung der Durchgangsleitung druckdicht mit dem Gehäuse verbunden ist.

Gemäß einer weiteren vorteilhaften Ausführungsvariante ist vorgesehen, dass der Zuleitungsanschluss und der Ableitungsanschluss derart ausgelegt und eingerichtet sind, dass in einem angeschlossenen Zustand der Druckentlastungsvorrichtung die Durchgangsleitung mittels des Zuleitungs- und Ableitungsanschlusses druckfest mit der Medienleitung verbunden ist, wobei das Medium an einem dem Zuleitungsanschluss zugewandten Ende der Durchgangsleitung in diese hineinströmt und an einem dem Ableitungsanschluss zugewandten Ende der Durchgangsleitung aus dieser wieder hinausströmt. Damit durchströmt das Medium die Durchgangsleitung in Strömungsrichtung. Besondere Vorteile ergeben sich somit, wenn die Durchgangsleitung dicht und druckfest mit der Medienleitung verbunden ist.

Gemäß einer nochmals weiteren vorteilhaften Ausführungsvariante ist vorgesehen, dass das elastisch verformbare Material der Durchgangswandung gas- und flüssigkeitsdicht ist. Vorzugsweise ist das elastisch verformbare Material ein elastisch verformbarer Kunststoff oder aber ein entsprechendes elastisch verformbares natürliches Material, beispielsweise ein Gummiwerkstoff. Vorteile ergeben sich auch darüber, wenn das elastisch verformbare Material zusätzlich innerhalb vorgegebener bzw. gewünschter Grenzen druckstabil ist.

Gemäß einer nochmals weiteren vorteilhaften Ausführungsvariante ist vorgesehen, dass das elastisch verformbare Material der Durchgangswandung chemikalien- und/oder hitzebeständig ist. Insbesondere im Hinblick auf eine effektive, den Hygienevorschriften in der Lebensmittelindustrie genügende Reinigung ist es von besonderer Bedeutsamkeit, wenn das elastisch verformbare Material der Durchgangswandung gegenüber verschiedensten, üblicherweise zu verwendenden Reinigungs- und/oder Desinfektionsmitteln beständig ist. Beispielsweise sollten vorgeschriebene Grenzwerte für Beständigkeiten gegenüber Reinigungsmitteln in Behälterbehandlungsanlagen, insbesondere in Füllmaschinen eingehalten werden.

Gemäß einer nochmals weiteren vorteilhaften Ausführungsvariante ist vorgesehen, dass die Drucksteuerung eine Rechnereinheit umfasst.

Gemäß einer nochmals weiteren vorteilhaften Ausführungsvariante ist vorgesehen, dass die Drucksteuerung zusätzlich eine Sensoreinheit umfasst, wobei die Sensoreinheit dazu ausgebildet ist, wenigstens den Druckrauminnendruck zu erfassen.

Gemäß einer nochmals weiteren vorteilhaften Ausführungsvariante ist vorgesehen, dass eine unabhängige Energieversorgungseinheit vorgesehen ist, wobei die Energieversorgungseinheit dazu eingerichtet ist, wenigstens die Drucksteuerung mit Energie zu versorgen. Da bei einem Nothalt bzw. bei einer Betriebsstörung teilweise auch die elektrische Energieversorgung der Behälterbehandlungsanlage, insbesondere der Füllmaschine abgeschaltet wird, ist eine unabhängige Energieversorgung von besonderem Vorteil. Beispielsweise kann die unabhängige Energieversorgungseinheit eine Energiespeichereinheit für elektrische Energie umfassen, von der bei Bedarf die nötige elektrische Energie entnommen und zur Verfügung gestellt werden kann.

Gemäß einer nochmals weiteren vorteilhaften Ausführungsvariante ist vorgesehen, dass die Drucksteuerung dazu ausgebildet ist, den Druckrauminnendruck ausgehend von einem Istwert auf einen Sollwert zu verringern und/oder zu erhöhen. Als Sollwerte können je nach Betriebszustand oder je nach angestrebter Änderung des Betriebszustandes beispielsweise ein erster, dem Betriebsdruck oder Produktionsdruck entsprechender Druckrauminnendruck oder aber ein dazu geringerer, einem Entlastungsdruck entsprechender, zweiter Druckrauminnendruck verstanden werden. Je nachdem ob in Nothalt-Situationen entlastet werden soll oder ob nach Fehlerbehebung die Behälterbehandlungsmaschine wieder angefahren werden soll, wird ausgehend von einem bestehenden Istwert der Druckrauminnendruck auf den gewünschten Sollwert verringert oder erhöht.

Bevorzugt wird jedoch stets ein Mindestdruck eingehalten, um beispielsweise das Ausgasen von im Medium gelösten Gasen, beispielsweise CO₂, zu vermeiden. Besonders bevorzugt wird der Entlastungsdruck auf maximal 0.5 bar eingestellt. Der Produktionsdruck kann bis etwa 6 bar betragen.

Die Druckentlastungsvorrichtung ist vorzugsweise in Bezug auf verschiedenste Parameter angepasst oder anpassbar an die Medienleitung. So kann die Druckentlastungsvorrichtung etwa an unterschiedliche Nennweiten der Medienleitungen und/oder Eigenschaften des oder der geführten Medien angepasst sein. Beispielsweise sind ein Durchmesser und ein Gesamtvolumen der Medienleitungen sowie ein Innenvolumen des Gehäuses bzw. ein Volumen des Druckraumes aufeinander abgestimmt. Ebenso ist das Expansionsvolumen der Durchgangsleitung und insbesondere auch ein Leistungsvermögen [m³ Druckluft / Stunde] der Drucksteuerung abgestimmt auf die Medienleitung bzw. auf die geführten Medien. Insbesondere ist die Druckentlastungsvorrichtung derart eingerichtet, dass ein schneller Druckabbau, aber auch ein schneller Druckaufbau möglich sind.

Bevorzugt wird stets ein minimaler Überdruck in der Medienleitung aufrechterhalten, um einen Eintrag von Keimen oder Verunreinigungen sicher zu verhindern. Gemäß einer nochmals weiteren vorteilhaften Ausführungsvariante ist vorgesehen, dass die Drucksteuerung zur Beaufschlagung des Druckraumes mit Druckluft ausgebildet ist. Alternativ oder zusätzlich kann auch eine unabhängige Druckluftversorgungseinheit vorgesehen sein, um im Falle einer möglichen Abschaltung einer zentralen Druckluftversorgung die Einstellung des Druckraum innendruckes zu gewährleisten.

Die vorliegende Erfindung umfasst auch ein Verfahren gemäss Anspruch 12.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung.

Ausdrücklich wird auch der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine grob schematische Blockansicht einer an eine Medienleitung angeschlossenen, beispielhaften Ausführungsvariante einer Druckentlastungvorrichtung in einem ersten Betriebszustand unter Produktionsdruck,
- Fig. 2: eine grob schematische Blockansicht der Ausführungsvariante der Druckentlastungvorrichtung der Figur 1 in einem zweiten Betriebszustand unter Entlastungsdruck,
- Fig. 3: grob schematisch dargestellt eine Ansicht einer beispielhaften Ausführungsvariante der Druckentlastungvorrichtung mit teilweise angeschnittener Gehäusewandung in einem ersten Betriebszustand unter Produktionsdruck,
- Fig. 4: grob schematisch dargestellt eine Ansicht der beispielhaften Ausführungsvariante gemäß Figur 3 mit teilweise angeschnittener Gehäusewandung in einem zweiten Betriebszustand unter Entlastungsdruck,
- Fig. 5a: in einem Schnitt in Richtung der Hauptachse HA grob schematisch dargestellt einen Abschnitt der Durchgangswandung in einem ersten Betriebszustand unter Produktionsdruck und
- Fig. 5b: den Schnitt der Figur 5a bei Einstellung des Entlastungsdruckes.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

Die in den Figuren allgemein mit 1 bezeichnete Druckentlastungsvorrichtung dient zur Druckentlastung von Medienleitungen 11 in Behälterbehandlungsanlagen, insbesondere in Füllanlagen oder Füllmaschinen bzw. Füllsystemen.

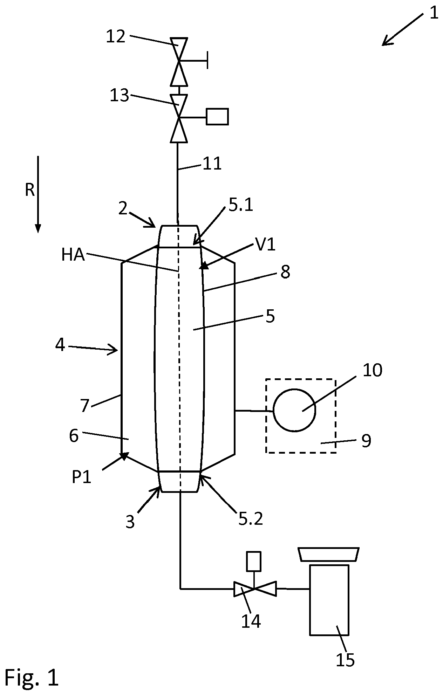

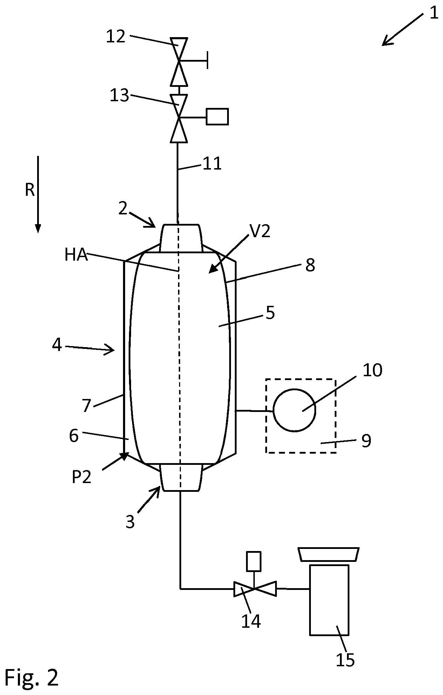

In den Figuren 1 und 2 ist jeweils eine grob schematische Blockansicht gezeigt, die eine an eine Medienleitung 11 angeschlossene, beispielhafte Ausführungsvariante einer Druckentlastungvorrichtung 1 in unterschiedlichen Betriebszuständen, nämlich in einem ersten und zweiten Betriebszustand veranschaulicht.

Figur 1 zeigt die angeschlossene Druckentlastungvorrichtung 1 im ersten Betriebszustand, nämlich unter normalen Betriebsbedingungen bzw. im Normalbetrieb, insbesondere bei laufendem Betrieb bzw. Produktionsbetrieb der Füllanlage. In diesem Normalbetrieb bzw. Produktionsbetrieb stehen die Medienleitungen 11, insbesondere auch die Produktleitungen, die beispielsweise Getränke von einem Vorhaltebehälter, beispielsweise vom Getränkekeller bis hin zu einem Füller oder Füllkopf 15 bzw. bis zu einem Zulauf- oder Füllventil 14 führen, unter Druck. In den Medienleitungen 11 herrscht damit ein so genannter Produktionsdruck bzw. Mediendruck.

Die eine Hauptachse HA aufweisende Druckentlastungsvorrichtung 1 ist in der Medienleitung 11, insbesondere Getränke- bzw. Produkt- oder Füllgutleitung angeordnet und mittels eines Zuleitungsanschlusses 2 sowie eines Ableitungsanschlusses 3 zum jeweiligen Anschluss an die Medienleitung 11 an diese angeschlossen. Die Druckentlastungsvorrichtung 1 ist somit quasi als Zwischenstück oder Zwischenelement in die Medienleitung 11 eingebaut bzw. integriert oder zwischengeschaltet.

Bevorzugt ist die Druckentlastungsvorrichtung 1 im angeschlossenen Zustand in einer Strömungsrichtung R des Mediums hinter einem beispielhaft dargestellten Absperrventil der Medienleitung 11, beispielsweise einem automatischen Absperrventil 13 und/oder einem manuellen Absperrventil 14 angeordnet, über das die Verbindung der Medienleitung 11 zur Quelle des Mediums, beispielsweise zur Zuleitung aus dem Getränkekeller, unterbrochen werden kann. Gleichzeitig ist die Druckentlastungsvorrichtung 1 in Strömungsrichtung R vor dem Zulauf- oder Füllventil 14 angeordnet. Die Hauptachse HA der Druckentlastungsvorrichtung 1 ist dabei in Strömungsrichtung R orientiert.

Die Druckentlastungsvorrichtung 1 umfasst ein Gehäuse 4 mit einer Gehäusewandung 7, wobei im Inneren des Gehäuses 4 ein durch die Gehäusewandung 7 definierter Druckraum 6 ausgebildet ist. Eine mit der Medienleitung 11 verbindbare und von einer Durchgangswandung 8 umschlossene Durchgangsleitung 5 für das Medium, erstreckt sich, den Druckraum 6 in Richtung der Hauptachse HA durchlaufend, im Inneren des Gehäuses 4, wobei die Durchgangsleitung 5 vom Zuleitungsanschluss 2 bis zum Ableitungsanschluss 3 reicht und über die Zuleitungs- und Ableitungsanschlüsse 2, 3 mit der Medienleitung verbunden ist, derart dass das Medium in Strömungsrichtung R an einem mit dem Zuleitungsanschluss 2 verbundenen Ende 5.1 der Durchgangsleitung 5 in diese einströmt und an einem mit dem Ableitungsanschluss 3 verbundenen Ende 5.2 der Durchgangsleitung 5 aus dieser wieder herausströmt.

Mittels einer bei der Druckentlastungsvorrichtung 1 vorgesehenen, mit dem Druckraum 6 in wirksamer Verbindung stehenden Drucksteuerung 10 kann im Druckraum 6 ein vorgegebener Druckrauminnendruck P1, P2 (siehe auch Figur 2) eingestellt werden, wobei unter dem in Figur 1 dargestellten Normal- bzw. Produktionsbetrieb der Druckrauminnendruck P1 im Wesentlichen mit dem in der Medienleitung 11 und damit auch mit dem in der Durchgangsleitung 5 herrschenden Druck des durchströmenden Mediums, nämlich mit dem Produktionsdruck übereinstimmt. Der Druckrauminnendruck P1 wird vorliegend auch als erster Druckrauminnendruck P1 bezeichnet, der im Wesentlichen dem Produktionsdruck gleichzusetzen ist.

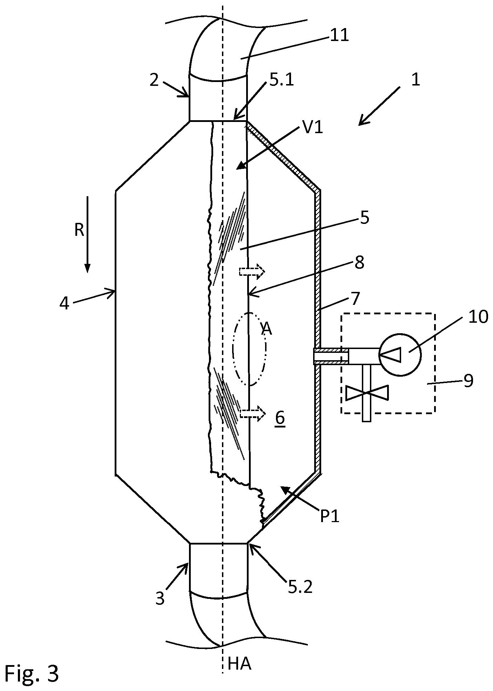

Die Durchgangswandung 8 der Durchgangsleitung 5 ist wenigstens in dem sich durch den Druckraum 6 erstreckenden Abschnitt zumindest teilweise aus einem elastisch verformbaren Material gebildet. Bei dem in Figur 1 dargestellten Normalbetrieb mit einem dem Produktionsdruck entsprechenden ersten Druckrauminnendruck P1, ist die Durchgangswandung 8 der Durchgangsleitung 5 daher nicht oder nur wenig gedehnt. Die Durchgangsleitung 5 weist unter Normalbetrieb eine im Wesentlichen zylindrische Form auf, wie auch aus der Figur 3 ersichtlich ist. Ein erstes Volumen V1 der Durchgangsleitung 5, welches vorliegend auch als Produktionsvolumen oder Normalvolumen verstanden wird, ist damit minimal.

Kommt es nun zu einer Störung oder sogar zu einer Produktionsunterbrechung, so wird in der Regel zunächst die Verbindung der Medienleitung 11 zur Quelle des Mediums unterbrochen. Beispielsweise wird die Medien- bzw. Produktleitung 11 durch das Schließen des automatischen Absperrventils 13 oder durch Betätigung des manuellen Absperrventils 12 von anderen Anlagenteilen und/oder von der Zuleitung aus dem Getränkekeller getrennt.

Parallel dazu oder aber auch anschließend wird mittels der Drucksteuerung 10 im Druckraum 6 der Druckentlastungsvorrichtung 1 ein zweiter Druckrauminnendruck P2 eingestellt, der vom Wert des ersten Druckrauminnendruckes P1 verschieden ist, wobei der Wert des zweiten Druckrauminnendruckes P2 kleiner ist als derjenige des ersten Druckrauminnendruckes P1 und damit auch kleiner als der Produktionsdruck bzw. der Mediendruck in der Medienleitung 11 und in der Durchgangsleitung 5 unter Normalbetrieb. Der geringere, zweite Druckrauminnendruck P2 entspricht daher einem Entlastungsdruck.

Durch diese Maßnahme der Verringerung des Druckrauminnendruckes auf den zweiten Druckrauminnendruck P2 ist zunächst der Mediendruck in der Durchgangsleitung 5, nämlich der Produktionsdruck, größer als der im Druckraum 6 herrschende Druckrauminnendruck P2. Aufgrund der aus einem elastisch verformbaren Material gebildeten Durchgangswandung 8 der Durchgangsleitung 5 kann die Durchgangswandung 8 der Druckkraft des in der Durchgangsleitung 5 befindlichen Mediums bzw. dem Produktionsdruck nachgeben und sich ausdehnen. Das Volumen der Durchgangsleitung 5 erweitert sich darüber auf ein zweites Volumen V2, welches vorliegend auch als Entlastungsvolumen verstanden wird. Ein Entlastungszustand mit entsprechend erweitertem zweiten Volumen V2 der Durchgangsleitung 5 ist in der Figur 2 dargestellt.

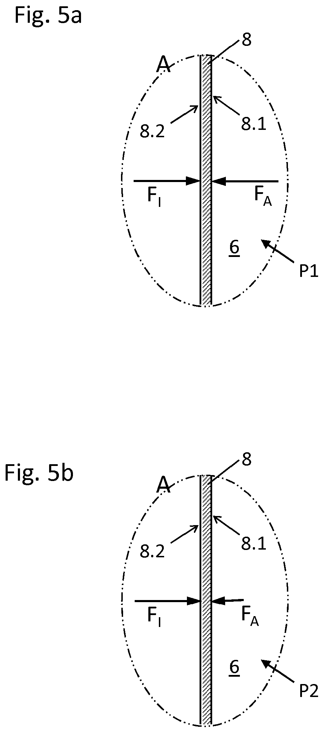

Die Ausdehnung der Durchgangswandung 8 und damit die Volumenvergrößerung der Durchgangsleitung 5 steht in direkter Relation zu einer Druckdifferenz zwischen dem Produktionsdruck und dem Entlastungsdruck, wobei die Ausdehnung der Durchgangswandung 8 über ein Verhältnis aus Druckkräften F_{I}, F_{A} (siehe dazu Figuren 5a und 5b) bestimmt wird, die auf eine dem Druckraum 6 abgewandte Innenseite 8.2 der Durchgangswandung 8 und auf eine dem Druckraum 6 zugewandte Außenseite 8.1 der Durchgangswandung 8 einwirken und somit bezogen auf das Innere der Durchgangsleitung 5 nach außen bzw. nach innen orientiert sind.

In Abhängigkeit von dem Grad der Kompressibilität des die Medienleitung 11 und die Durchgangsleitung 5 durchströmenden Mediums sinkt der Mediendruck bereits bei geringer Volumenausdehnung der Durchgangsleitung 5 erheblich. Jegliche von einem unter Druck stehenden Medium ausgehende Gefahr kann somit durch die gezielte Einstellung des verringerten Druckrauminnendruckes P2 sicher vermieden werden.

Beispielsweise beträgt die Kompressibilität von Wasser gemäß dV/(V*dp) etwa 0,5 * (1/ Gigapascal). Schon die kleinste, durch eine elastische Verformung der Durchgangswandung 8 bewirkte Volumenänderung der Durchgangsleitung 5 reicht daher aus, um einen geringeren Mediendruck für ein auf Wasser basierendes Medium einzustellen.

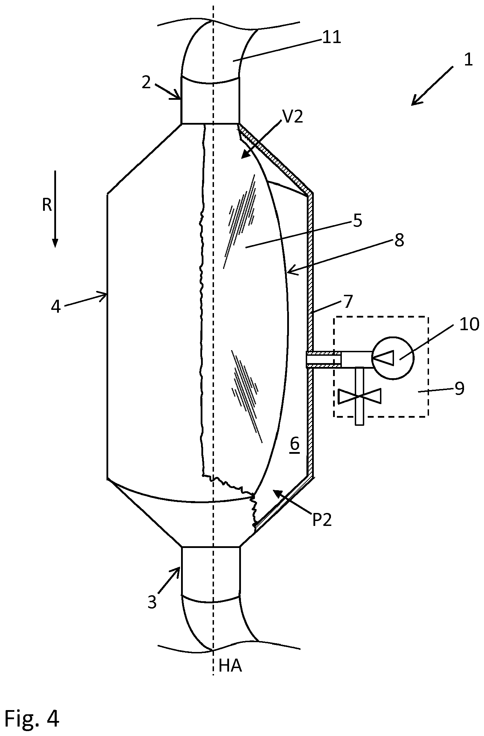

In den Darstellungen der Figuren 3 und 4 ist jeweils eine grob schematische Ansicht einer Ausführungsvariante der Druckentlastungvorrichtung 1 mit teilweise in Richtung der Hauptachse HA angeschnittener Gehäusewandung 7 im ersten Betriebszustand unter Produktionsdruck sowie im zweiten Betriebszustand unter Entlastungsdruck gezeigt.

Wie aus den Figuren hervorgeht, ist die Durchgangsleitung 5 der Druckentlastungvorrichtung 1 in Bezug auf ihre Weite an die Medienleitung 11 angepasst. Unter Produktionsdruck entspricht die Weite der Durchgangsleitung 5 bzw. deren Durchmesser oder Querschnitt im Wesentlichen der Weite bzw. dem Durchmesser oder Querschnitt der Medienleitung 11, so dass ein ungehindertes und vollständiges Durchströmen der Durchgangsleitung 5 mit Medium erfolgen kann.

Gemäß dem in den Figuren 3 und 4 dargestellten Beispiel ist die Durchgangswandung 8 der Durchgangsleitung 5 vollständig aus elastisch verformbarem Material hergestellt. Das elastisch verformbare Material der Durchgangswandung 8 ist dabei insbesondere temperaturbeständig sowie beständig gegen üblicherweise für Behälterbehandlungsanlagen verwendete Reinigungs- und Desinfektionsmittel. Beispielhaft sind in der nachfolgenden Tabelle spezifische Angaben in Bezug auf die Beständigkeit der Durchgangswandung 8 gegenüber verschiedenen Reinigungs- und Desinfektionsmittel gelistet:

| **Reinigungsmittel** | **Konzentration** | **Temperatur** | **Tägliche Kontaktzeit** |
|---|---|---|---|
| Alkalische Reinigung auf Basis NaOH | bis 3% | 85°C | 45 min |
| Kombinierte Reinigung und Desinfektion auf Basis NaOH und Na-Hydrochlorid (pH = 12) | bis 3% | 80°C | 45 min |
| Saure Reinigung auf Basis H₃PO₄ und HNO₃ (Phosphorund Salpetersäure) | bis 1,5% | 30°C | 30 min |
| Desinfektion auf Basis Na-Hydrochlorid (pH = 9) | bis 300 ppm aktives Chlor | 30°C | 45 min |
| Desinfektion Peressigsäure (PES) bei Chloridgehalt des Betriebswassers bis 300ppm | bis 0,3% | 30°C | 16 Std. |
| Desinfektion auf Basis Jodophor bei Chloridgehalt des Betriebswassers bis 300ppm | bis 100 ppm aktives Jod | 30°C | 16 Std. |
| Heißwasser | ----- | 95°C | 45 min |
| Dampf | ----- | 130°C | Dauerkontakt |
| Ozon | 600 mg/m³ Luft | 0-30°C | ----- |

In dem ersten Betriebszustand unter Produktionsdruck gemäß Figur 3 ist im Druckraum 6 der dem Produktionsdruck entsprechende erste Druckrauminnendruck P1 eingestellt. Die Durchgangswandung 8 der Durchgangsleitung 5 ist nicht ausgedehnt oder expandiert und daher quasi entspannt, so dass die Durchgangsleitung 5 eine im Wesentlichen zylindrische Form mit dem minimalen ersten Volumen V1 aufweist.

Ein in Figur 3 strichliert angedeuteter Ausschnitt A ist als Schnitt durch die Durchgangswandung 8 in Richtung der Hauptachse HA in einer Detaillansicht in den Figuren 5a und 5b dargestellt, um die auf die Durchgangswandung 8 wirkenden Kräfte zu veranschaulichen. Figur 5a zeigt dabei den Zustand unter Normalbetrieb, bei eingestelltem ersten Druckrauminnendruck P1 im Druckraum 6. In diesem Zustand sind die auf die Innenseite 8.2 der Durchgangswandung 8 einwirkende, in Richtung des Druckraumes 6 orientierte Druckkraft F_{I} und die auf die Außenseite 8.1 der Durchgangswandung 8 einwirkende, in Richtung zum Inneren der Durchgangsleitung 5 hin orientierte Druckkraft F_{A} etwa gleich groß, so dass ein Verhältnis F_{I}/F_{A} der Druckkräfte F_{I}, F_{A} einen Wert von rund eins aufweist.

Wird nun der Druck im Druckraum 6 reduziert und der im Vergleich zum Produktionsdruck geringere zweite Druckrauminnendruck P2 eingestellt so verändert sich damit das Verhältnis F_{I}/F_{A} der Druckkräfte F_{I}, F_{A}. Mit dem Einstellen des niedrigeren Druckrauminnendruckes P2 reduziert sich die auf die Außenseite 8.1 der Durchgangswandung 8 einwirkende, in Richtung zum Inneren der Durchgangsleitung 5 hin orientierte Druckkraft F_{A} (dargestellt in Figur 5b). Das Verhältnis F_{I}/F_{A} der Druckkräfte F_{I}, F_{A} steigt damit auf einen Wert größer eins und die Durchgangswandung 8 wird entsprechend einer resultierenden Kraftdifferenz in Richtung des Druckraumes 6 ausgedehnt, wie in der Figur 3 mit gestrichelten Pfeilen angedeutet.

In Figur 4 ist der Zustand nach Einstellung des zweiten Druckrauminnendruckes P2 dargestellt. Die Durchgangsleitung 5 weist aufgrund der Ausdehnung bzw. Expansion der Durchgangswandung 8 das erhöhte Volumen V2 auf. Die Durchgangsleitung 5 nimmt dabei eine nach außen in Richtung des Druckraumes 6 gewölbte Form bzw. eine bauchige Form an. Beispielsweise beschreibt die Form der Durchgangsleitung 5 in diesem Zustand näherungsweise zumindest einen Abschnitt eines Rotationsellipsoids.

Ein Differenzvolumen V2-V1, nämlich zweites Volumen V2 abzüglich des ersten Volumens V1, stellt das Expansionsvolumen dar. Das in der Medienleitung 11 enthaltene Medium kann sich nach Expansion der Durchgangsleitung 5 somit auf ein insgesamt größeres Volumen verteilen, so dass mittels dieses Expansionsvolumens eine effiziente Druckminderung bzw. Druckentlastung in den Medienleitungen 11 erzielt werden kann.

Die Einstellung des Druckrauminnendruckes P1, P2 erfolgt mittels der Drucksteuerung 10, welche in den vorliegend dargestellten Beispielen eine Rechnereinheit 9 umfasst. Die Drucksteuerung 10 ist derart ausgebildet und eingerichtet, dass beispielsweise auch die Herbeiführung eines drucklosen Zustandes ist möglich. Ebenso ist es möglich, den Druckraum 6 mit einem Unterdruck zu beaufschlagen, wodurch sich die elastische verformbare Durchgangswandung 8 der Durchgangsleitung 5 noch weiter dehnt. Im Extremfall kann sich die elastische verformbare Durchgangswandung 8 so weit ausdehnen, dass die zumindest teilweise an einer Innenseite der Gehäusewandung 7 des Gehäuses 4 anliegt. Durch diese Maßnahme kann beispielsweise das Expansionsvolumen noch weiter gesteigert werden.

Dabei ist jedoch zu beachten, dass der Entlastungsdruck bevorzugt größer Null ist. Besonders bevorzugt wird der Entlastungsdruck so gewählt, dass der Druck des Produktes/Füllgutes einen gewünschten Mindestwert nicht unterschreitet und es beispielsweise nicht zum plötzlichen und unerwünschten Ausgasen von im Medium, insbesondere im Füllgut gelöster Gase, z.B. CO₂, kommt.

Wird nun nach erledigter Reparatur oder Wartung bzw. nach Beheben der Betriebsstörung die Behälterbehandlungsmaschine oder -anlage wieder in Betrieb genommen, so wird der Druck im Druckraum 6 mittels der Drucksteuerung 10 wieder auf den Soll-Wert erhöht, das heißt, es wird wieder der erste Druckrauminnendruck P1 eingestellt, wodurch auch das Füllgut bzw. das Medium wieder auf den notwendigen Soll-Druck, nämlich auf den Produktionsdruck gebracht wird.

Die Erfindung wurde voranstehend an Ausführungsbeispielen beschrieben. Es versteht sich, dass zahlreiche Änderungen sowie Abwandlungen innerhalb der Reichweite der Ansprüche möglich sind.

### Bezugszeichenliste

- 1: Druckentlastungsvorrichtung
- 2: Zuleitungsanschluss
- 3: Ableitungsanschluss
- 4: Gehäuse
- 5: Durchgangsleitung
- 5.1: mit dem Zuleitungsanschluss verbundenes Ende
- 5.2: mit dem Ableitungsanschluss verbundenes Ende
- 6: Druckraum
- 7: Gehäusewandung
- 8: Durchgangwandung
- 8.1: Außenseite der Durchgangswandung
- 8.2: Innenseite der Durchgangswandung
- 9: Rechnereinheit
- 10: Drucksteuerung
- 11: Medienleitung
- 12: manuelles Absperrventil
- 13: automatisches Absperrventil
- 14: Zulauf- bzw. Füllventil
- 15: Füllkopf
- F,: Druckkraft
- F_{A}: Druckkraft
- HA: Hauptachse
- P1: erster Unterdruck
- P2: zweiter Unterdruck
- R: Strömungsrichtung
- V1: erstes Volumen
- V2: zweites Volumen

## Patentansprüche

1. Behälterbehandlungsmaschine oder -anlage in der Form einer Füllmaschine oder Füllanlage oder Behälterabfüllanlage mit einer Medienleitung (11) in der Form einer Getränke-, Füllgut- oder Produktleitung und einer Druckentlastungsvorrichtung (1) zur aseptischen Druckentlastung in der Medienleitung (11), wobei die Druckentlastungsvorrichtung (1) wenigstens ein Gehäuse (4) mit einer Gehäusewandung (7), eine mit der Medienleitung (11) in Verbindung stehende und eine Durchgangswandung (8) aufweisende Durchgangsleitung (5) und zumindest einen Zuleitungsanschluss (2) und einen Ableitungsanschluss (3) zum jeweiligen Anschluss an die Medienleitung (11) umfasst, wobei im Inneren des Gehäuses (4) ein durch die Gehäusewandung (7) definierter Druckraum (6) ausgebildet ist und wobei sich die Durchgangsleitung (5) wenigstens abschnittsweise durch den Druckraum (6) im Inneren des Gehäuses (4) erstreckt, und wobei die Durchgangswandung (8) der Durchgangsleitung (5) wenigstens in einem sich durch den Druckraum (6) erstreckenden Abschnitt zumindest teilweise aus einem elastisch verformbaren Material gebildet ist und wobei die Druckentlastungsvorrichtung (1) derart ausgebildet ist, dass in dem Druckraum (6) zumindest ein vorgegebener Druckrauminnendruck (P1, P2) einstellbar ist,
und wobei die Druckentlastungsvorrichtung (1) eine mit dem Druckraum (6) in wirksamer Verbindung stehende Drucksteuerung (10) umfasst, wobei die Drucksteuerung (10) zur Einstellung des zumindest einen vorgegebenen Druckrauminnendruckes (P1, P2) im Druckraum (6) eingerichtet ist, wobei für einen ersten Betriebszustand in dem Druckraum (6) ein erster Druckrauminnendruck (P1) einstellbar ist, welcher im Wesentlichen einem in der Medienleitung herrschenden Produktionsdruck entspricht und bewirkt, dass die Durchgangsleitung (5) ein erstes Volumen (V1) einnimmt, und wobei für einen zweiten Betriebszustand in dem Druckraum (6) ein zweiter Druckrauminnendruck (P2) einstellbar ist, wobei der zweite Druckrauminnendruck (P2) einem im Vergleich zum Produktionsdruck geringeren Entlastungsdruck entspricht und bewirkt, dass die Durchgangsleitung (5) ein zweites Volumen (V2) einnimmt,
und wobei ein Umschalten von dem ersten Druckrauminnendruck (P1) auf den zweiten Druckrauminnendruck (P2) durch die Drucksteuerung (10) dazu führt, dass die Durchgangswandung (8) sich ausdehnt und die Durchgangsleitung (5) ein im Vergleich zum ersten Volumen (V1) größeres, zweites Volumen (V2) einnimmt, wodurch es zu einer aseptischen Druckentlastung in der Medienleitung (11) kommt.

2. Behälterbehandlungsmaschine oder -anlage nach Anspruch 1, **dadurch gekennzeichnet, dass** die Durchgangswandung (8) der Durchgangsleitung (5) druckdicht mit dem Gehäuse (4) verbunden ist.

3. Behälterbehandlungsmaschine oder -anlage nach Anspruch 1 oder 2, **dadurch gekennzeichnet, dass** der Zuleitungsanschluss (2) und der Ableitungsanschluss (3) derart ausgelegt und eingerichtet sind, dass in einem angeschlossenen Zustand der Druckentlastungsvorrichtung (1) die Durchgangsleitung (5) mittels des Zuleitungs- und Ableitungsanschlusses (2, 3) druckfest mit der Medienleitung (11) verbunden ist, wobei das Medium an einem dem Zuleitungsanschluss (2) zugewandten Ende (5.1) der Durchgangsleitung (5) in diese hineinströmt und an einem dem Ableitungsanschluss (3) zugewandten Ende (5.2) der Durchgangsleitung (5) aus dieser wieder hinausströmt.

4. Behälterbehandlungsmaschine oder -anlage nach einem der vorhergehenden Ansprüche, **dadurch gekennzeichnet, dass** die Durchgangswandung (8) vollständig aus dem elastisch verformbaren Material gebildet ist.

5. Behälterbehandlungsmaschine oder -anlage nach einem der vorhergehenden Ansprüche, **dadurch gekennzeichnet, dass** das elastisch verformbare Material der Durchgangswandung (8) gas- und flüssigkeitsdicht ist.

6. Behälterbehandlungsmaschine oder -anlage nach einem der vorhergehenden Ansprüche, **dadurch gekennzeichnet, dass** das elastisch verformbare Material der Durchgangswandung (8) chemikalien- und/oder hitzebeständig ist.

7. Behälterbehandlungsmaschine oder -anlage nach einem der vorhergehenden Ansprüche 2 bis 6, **dadurch gekennzeichnet, dass** die Drucksteuerung (10) eine Rechnereinheit (9) umfasst.

8. Behälterbehandlungsmaschine oder -anlage nach einem der vorhergehenden Ansprüche 2 bis 7, **dadurch gekennzeichnet, dass** die Drucksteuerung (10) zusätzlich eine Sensoreinheit umfasst, wobei die Sensoreinheit dazu ausgebildet ist, wenigstens den Druckrauminnendruck (P1, P2) zu erfassen.

9. Behälterbehandlungsmaschine oder -anlage nach einem der vorhergehenden Ansprüche, **dadurch gekennzeichnet, dass** eine unabhängige Energieversorgungseinheit vorgesehen ist, wobei die Energieversorgungseinheit dazu eingerichtet ist, wenigstens die Drucksteuerung (10) mit Energie zu versorgen.

10. Behälterbehandlungsmaschine oder -anlage nach einem der vorhergehenden Ansprüche 2 bis 9, **dadurch gekennzeichnet, dass** die Drucksteuerung (10) dazu ausgebildet ist, den Druckrauminnendruck (P1, P2) ausgehend von einem Istwert auf einen Sollwert zu verringern und/oder zu erhöhen.

11. Behälterbehandlungsmaschine oder -anlage nach einem der vorhergehenden Ansprüche 2 bis 10, **dadurch gekennzeichnet, dass** die Drucksteuerung (10) zur Beaufschlagung des Druckraumes (6) mit Druckluft ausgebildet ist.

12. Verfahren zur Verwendung einer Behälterbehandlungsmaschine oder -anlage, nämlich einer Füllmaschine oder Füllanlage oder Behälterabfüllanlage, gemäß einem der Ansprüche 1 bis 11, wobei Druck in einer Medienleitung (11), mittels einer in der Medienleitung (11) eingebauten Druckentlastungsvorrichtung (1) aseptisch entlastet wird, wobei
die Druckentlastungsvorrichtung (1) wenigstens ein Gehäuse (4) mit einer Gehäusewandung (7), einen im Inneren des Gehäuses (4) durch die Gehäusewandung (7) definierten Druckraum (6) und eine mittels eines Zuleitungsanschlusses (2) und eines Ableitungsanschlusses (3) mit der Medienleitung (11) verbundene, eine Durchgangswandung (8) aufweisende und sich wenigstens abschnittsweise durch den Druckraum (6) erstreckende Durchgangsleitung (5) umfasst, wobei zur Entlastung eines Mediendrucks in der Medienleitung ein in dem Druckraum (6) herrschender Druckrauminnendruck (P1, P2) reduziert wird und dadurch mittels Ausdehnung der Durchgangswandung (8) ein Volumen der Durchgangsleitung (5) erhöht wird, und wobei die Einstellung des Druckrauminnendruckes (P1, P2) mittels einer Drucksteuerung (10) erfolgt, wobei zur Entlastung des Mediendrucks in der Medienleitung (11) ausgehend von einem ersten Druckrauminnendruck (P1) ein geringerer zweiter Druckrauminnendruck (P2) eingestellt wird.

## Claims

1. Container treatment device or system in the form of a filling machine or filling system or container filling system, with a media line (11) in the form of a beverage, filling material, or product line, and a pressure relief device (1) for aseptic pressure relief in the media line (11), wherein the pressure relief device (1) comprises at least one housing (4) with a housing wall (7), a through-line (5) which is in connection with the media line (11) and comprises a through-wall (8), and at least one feed line connection (2) and a discharge line connection (3) for the respective connection to the media line (11), wherein a pressure chamber (6) defined by the housing wall (7) is formed in the interior of the housing (4), and wherein the through-line (5) extends at least in part through the pressure chamber (6) in the interior of the housing (4), and wherein the through-wall (8) of the through-line (5) is at least partially formed from an elastically deformable material in a section extending through the pressure chamber (6), and wherein the pressure relief device (1) is configured in such a way that at least one predefined pressure chamber inner pressure (P1, P2) can be adjusted in the pressure chamber (6),
and wherein the pressure relief device (1) comprises a pressure control device (10) which is in effective connection with the pressure chamber (6), wherein the pressure control device (10) is configured for the setting of the at least one predefined pressure chamber inner pressure (P1, P2) in the pressure chamber (6), wherein a first pressure chamber inner pressure (P1) can be adjusted and set for a first operational state in the pressure chamber (6), which essentially corresponds to the production pressure prevailing in the media line and has the effect that the through-line (5) occupies a first volume (V1), and wherein a second pressure chamber inner pressure (P2) can be adjusted and set for a second operational state in the pressure chamber (6), wherein the second pressure chamber inner pressure (P2) corresponds to a pressure relief pressure which is lower in comparison with the production pressure, and which has the effect that the through-line (5) occupies a second volume (V2),
and wherein a switchover from the first pressure chamber inner pressure (P1) to the second pressure chamber inner pressure (P2) by the pressure control device (10) has the effect that the through-wall (8) expands, and the through-line (5) occupies a second volume (V2) which is greater in comparison to the first volume (V1), as a result of which an aseptic pressure relief comes about in the media line (11).

2. Container treatment machine or system according to claim 1, **characterised in that** the through-wall (8) of the through-line (5) is connected in a pressure-tight manner to the housing (4).

3. Container treatment machine or system according to claim 1 or 2, **characterised in that** the feed line connection (2) and the discharge line connection (3) are configured and arranged in such a way that, with the pressure relief device (1) in a connected state, the through-line (5) is connected in a pressure-tight manner to the medium line (11) by way of the feed and discharge connections (2, 3), wherein the medium flows into the through-line (5) at one of its ends facing (5.1) towards the feed one connection (2), and flows out of it again at an end (5.2) of the through-line (5) facing towards the discharge line (3).

4. Container treatment machine or system according to any one of the preceding claims, **characterised in that** the through-wall (8) is formed entirely from the elastically deformable material.

5. Container treatment machine or system according to any one of the preceding claims, **characterised in that** the elastically deformable material of the through-wall (8) is gas-tight and fluid-tight.

6. Container treatment machine or system according to any one of the preceding claims, **characterised in that** the elastically deformable material of the through-wall (8) is resistant to chemicals and/or heat.

7. Container treatment machine or system according to any one of the preceding claims 2 to 6, **characterised in that** the pressure control device (10) comprises a calculator unit (9).

8. Container treatment machine or system according to any one of the preceding claims 2 to 7, **characterised in that** the pressure control device (10) additionally comprises a sensor unit, wherein the sensor unit is configured such as to detect at least the pressure chamber inner pressure (P1, P2).

9. Container treatment machine or system according to any one of the preceding claims, **characterised in that** an independent energy supply unit is provided, wherein the energy supply unit is configured such as to supply at least the pressure control device (10) with energy.

10. Container treatment machine or system according to any one of the preceding claims 2 to 9, **characterised in that** the pressure control device (10) is configured such as to reduce and/or increase the pressure chamber inner pressure (P1, P2), starting from an actual value to a reference value.

11. Container treatment machine or system according to any one of the preceding claims 2 to 10, **characterised in that** the pressure control device (10) is configured such as to impose compressed air on the pressure chamber (6).

12. Method for using a container treatment machine or system, namely a filling machine or filling system or container filling system, according to any one of claims 1 to 11, wherein pressure in a media line (11) is aseptically relieved by a pressure relief device (1) integrated in the media line (11), wherein the pressure relief device (1) comprises at least one housing (4), with a housing wall (7), a pressure chamber (6) in the interior of the housing (4) defined by the housing wall (7), and a through-line (5), connected by means of a feed line connection (2) and a discharge line connection (3) to the media line (11), comprising a through-wall (8) and extending at least partially through the pressure chamber (6), wherein, for relieving a media pressure in the media line, a pressure chamber inner pressure (P1, P2) prevailing in the pressure chamber (6) is reduced, and, as a result, by means of the expansion of the through-wall (8), a volume of the through-line (5) is increased, and wherein an adjustment of the pressure chamber inner pressure (P1, P2) takes place by means of a pressure control device (10), wherein, in order to relieve the media pressure in the media line (11), starting from a first pressure chamber inner pressure (P1), a lesser second pressure chamber inner pressure (P2) is adjusted and set.

## Revendications

1. Machine ou installation de traitement de récipient sous la forme d'une machine de remplissage ou installation de remplissage ou installation de remplissage de récipient avec une conduite de fluide (11) sous la forme d'une conduite de boissons, de produit de remplissage ou de produit et un dispositif de décompression (1) pour la décompression aseptisée dans la conduite de fluide (11), dans laquelle le dispositif de décompression (1) comporte au moins un boîtier (4) avec une paroi de boîtier (7), une conduite traversante (5) se trouvant en liaison avec la conduite de fluide (11) et présentant une paroi traversante (8) et au moins un raccord d'alimentation (2) et un raccord d'évacuation (3) pour le raccordement respectif à la conduite de fluide (11), dans laquelle un espace de pression (6) défini par la paroi de boîtier (7) est réalisé à l'intérieur du boîtier (4) et dans laquelle la conduite traversante (5) s'étend au moins par sections à travers l'espace de pression (6) à l'intérieur du boîtier (4), et dans laquelle la paroi traversante (8) de la conduite traversante (5) est formée au moins dans une section s'étendant à travers l'espace de pression (6) au moins partiellement en un matériau déformable élastiquement et dans laquelle le dispositif de décompression (1) est réalisé de telle manière qu'au moins une pression intérieure d'espace de pression (P1, P2) prédéfinie soit réglable dans l'espace de pression (6),
et dans laquelle le dispositif de décompression (1) comporte une commande de pression (10) se trouvant en liaison active avec l'espace de pression (6), dans laquelle la commande de pression (10) est conçue pour le réglage d'au moins une pression intérieure d'espace de pression (P1, P2) prédéfinie dans l'espace de pression (6), dans laquelle pour un premier état de fonctionnement dans l'espace de pression (6), une première pression intérieure d'espace de pression (P1) est réglable, laquelle correspond sensiblement à une pression de production régnant dans la conduite de fluide et fait que la conduite traversante (5) occupe un premier volume (V1), et dans laquelle pour un second état de fonctionnement dans l'espace de pression (6), une seconde pression intérieure d'espace de pression (P2) est réglable, dans laquelle la seconde pression intérieure d'espace de pression (P2) correspond à une pression de décharge plus faible par rapport à la pression de production et fait que la conduite traversante (5) occupe un second volume (V2),
et dans laquelle une commutation de la première pression intérieure d'espace de pression (P1) à la seconde pression intérieure d'espace de pression (P2) par la commande de pression (10) mène à ce que la paroi traversante (8) s'étende et la conduite traversante (5) occupe un second volume (V2) supérieur par rapport au premier volume (V1), par quoi il se produit une décompression aseptisée dans la conduite de fluide (11).

2. Machine ou installation de traitement de récipient selon la revendication 1, **caractérisée en ce que** la paroi traversante (8) de la conduite traversante (5) est reliée de manière étanche à la pression au boîtier (4).

3. Machine ou installation de traitement de récipient selon la revendication 1 ou 2, **caractérisée en ce que** le raccord d'alimentation (2) et le raccord d'évacuation (3) sont configurés et conçus de telle manière que dans un état raccordé du dispositif de décompression (1) la conduite traversante (5) soit reliée au moyen du raccord d'alimentation et d'évacuation (2, 3) de manière résistante à la pression à la conduite de fluide (11), dans laquelle le fluide s'écoule à une extrémité (5.1) tournée vers le raccord d'alimentation (2) de la conduite traversante (5) dans celle-ci et s'écoule à une extrémité (5.2) tournée vers le raccord d'évacuation (3) de la conduite traversante (5) hors de celle-ci de nouveau.

4. Machine ou installation de traitement de récipient selon l'une quelconque des revendications précédentes, **caractérisée en ce que** la paroi traversante (8) est formée complètement en le matériau déformable élastiquement.

5. Machine ou installation de traitement de récipient selon l'une quelconque des revendications précédentes, **caractérisée en ce que** le matériau déformable élastiquement de la paroi traversante (8) est étanche au gaz et au liquide.

6. Machine ou installation de traitement de récipient selon l'une quelconque des revendications précédentes, **caractérisée en ce que** le matériau déformable élastiquement de la paroi traversante (8) est résistant aux produits chimiques et/ou à la chaleur.

7. Machine ou installation de traitement de récipient selon l'une quelconque des revendications précédentes 2 à 6, **caractérisée en ce que** la commande de pression (10) comporte une unité de calcul (9).

8. Machine ou installation de traitement de récipient selon l'une quelconque des revendications précédentes 2 à 7, **caractérisée en ce que** la commande de pression (10) comporte en outre une unité de capteur, dans laquelle l'unité de capteur est réalisée afin de détecter au moins la pression intérieure d'espace de pression (P1, P2).

9. Machine ou installation de traitement de récipient selon l'une quelconque des revendications précédentes, **caractérisée en ce qu'**une unité d'alimentation en énergie indépendante est prévue, dans laquelle l'unité d'alimentation en énergie est conçue afin d'alimenter en énergie au moins la commande de pression (10).

10. Machine ou installation de traitement de récipient selon l'une quelconque des revendications précédentes 2 à 9, **caractérisée en ce que** la commande de pression (10) est réalisée afin de diminuer et/ou d'augmenter la pression intérieure d'espace de pression (P1, P2) à partir d'une valeur réelle à une valeur de consigne.

11. Machine ou installation de traitement de récipient selon l'une quelconque des revendications précédentes 2 à 10, **caractérisée en ce que** la commande de pression (10) est réalisée pour l'alimentation de l'espace de pression (6) en air comprimé.

12. Procédé d'utilisation d'une machine ou installation de traitement de récipient, à savoir une machine de remplissage ou installation de remplissage ou installation de remplissage de récipient, selon l'une quelconque des revendications 1 à 11, dans lequel la pression est déchargée de manière aseptisée dans une conduite de fluide (11), au moyen d'un dispositif de décompression (1) intégré dans la conduite de fluide (11), dans lequel
le dispositif de décompression (1) comporte au moins un boîtier (4) avec une paroi de boîtier (7), un espace de pression (6) défini à l'intérieur du boîtier (4) par la paroi de boîtier (7) et une conduite traversante (5) reliée au moyen d'un raccord d'alimentation (2) et d'un raccord d'évacuation (3) à la conduite de fluide (11), présentant une paroi traversante (8) et s'étendant au moins par sections à travers l'espace de pression (6), dans lequel pour la décharge d'une pression de fluide dans la conduite de fluide une pression intérieure d'espace de pression (P1, P2) régnant dans l'espace de pression (6) est réduite et un volume de la conduite traversante (5) est augmenté ainsi au moyen de l'extension de la paroi traversante (8), et dans lequel le réglage de la pression intérieure d'espace de pression (P1, P2) est effectué au moyen d'une commande de pression (10), dans lequel une seconde pression intérieure d'espace de pression (P2) plus faible est réglée pour la décharge de la pression de fluide dans la conduite de fluide (11) à partir d'une première pression intérieure d'espace de pression (P1).
